# EUROPEAN PATENT APPLICATION

(11) **EP 4 686 256 A1**
(43) Date of publication of application: **28.01.2026**
(21) Application number: 24784114.1
(22) Date of filing: 26.03.2024
(51) Int. Cl.: H04W 36/00

(54) **COMMUNICATION METHOD AND COMMUNICATION APPARATUS**

(30) Priority: 07.04.2023 CN 202310404174
(71) Applicant: Huawei Technologies Co., Ltd., Shenzhen, Guangdong 518129 (CN)
(72) Inventor: SUN, Haiyang, Shenzhen, Guangdong 518129 (CN)
(74) Representative: Pfenning, Meinig & Partner mbB
(86) International application number: PCT/CN2024/083859
(87) International publication number: WO 2024/208029

(57) **Abstract**

This application discloses a communication method and a communication apparatus, to accurately generate an access and mobility management policy, and improve efficiency and accuracy of cell selection and reselection performed by UE. The method includes: A PCF network element obtains slice restriction information, to generate the AM policy based on the slice restriction information. In this way, the AM policy generated by the PCF network element already takes the slice restriction information into consideration, thereby ensuring accuracy of the generated AM policy, and ensuring the efficiency and the accuracy of cell reselection performed by the UE.

## Description

### CROSS-REFERENCE TO RELATED APPLICATIONS

This application claims priority to Chinese Patent Application No. 202310404174.3, filed with the China National Intellectual Property Administration on April 7, 2023 and entitled "COMMUNICATION METHOD AND COMMUNICATION APPARATUS", which is incorporated herein by reference in its entirety.

### TECHNICAL FIELD

This application relates to the field of wireless communication technologies, and in particular, to a communication method and a communication apparatus.

### BACKGROUND

With the gradual increase in communication services, it has become increasing challenging to fulfil all current communication requirements and future requirements using a single network. Therefore, a network slicing technology emerges, enabling the creation of multiple virtual networks over a set of hardware infrastructure, and allocating resources on demand to meet different requirements of various services. In this way, when a current network cannot meet emerging requirements, a new network slice may be virtualized for the new requirements without affecting existing network slices, thereby expediting service deployment. In addition, due to diversity of requirements, there may be network slice types that adapt to various types of requirements, for example, fixed wireless access (fixed wireless access, FWA) network slices, enhanced mobile broadband (enhanced mobile broadband, eMBB) network slices, massive machine type of communication (massive machine type of communication, mMTC) network slices, and ultra-reliable low-latency communication (ultra-reliable low-latency communication, uRLLC) network slices.

In a registration procedure of user equipment (user equipment, UE), a radio access network (radio access network, RAN) generally selects an access and mobility management function (access and mobility management function, AMF) network element for the UE based on locally stored information and a registration request message of the UE, where the AMF network element may also be understood as an initial AMF. However, the initial AMF may not support a network slice to be used by the UE. For example, the initial AMF supports only the FWA network slice, but the UE requests the eMBB network slice. If the initial AMF cannot serve the UE, the initial AMF queries a network slice selection function (network slice selection function, NSSF) network element and selects a target AMF that supports the network slice of the UE, and directly or indirectly sends the registration request message of the UE to the target AMF. The target AMF processes the registration request of the UE, and provides a network service for the UE.

Network slices are typically deployed for services in service areas. These service areas may not match existing tracking areas (tracking area, TA) or currently allocated registration areas (registration area, RA). In addition, the network slices may be deployed within a specific time interval. For this, the following features are introduced in the current standard: partially allowed network slice selection assistance information (network slice selection assistance information, NSSAI) (English: partially allowed NSSAI), partially rejected single network slice selection assistance information (single network slice selection assistance information, S-NSSAI) (English: rejected S-NSSAIs partially in the RA), area of service for S-NSSAI (English: AoS for S-NSSAI information), and validity time for a network slice (validity time for an S-NSSAI). When the network slice is unavailable, the AMF may replace the unavailable S-NSSAI with alternative S-NSSAI, and send the alternative S-NSSAI to the UE. The UE may use the alternative S-NSSAI to initiate a packet data unit (packet data unit, PDU) session. The foregoing information needs to be sent by a network side to the UE. The UE can initiate a service corresponding to S-NSSAI only when a condition is met, for example, the UE requests the S-NSSAI or mapped (mapped) S-NSSAI corresponding to the S-NSSAI, and initiates a PDU session corresponding to the S-NSSAI.

However, since there is a correspondence between S-NSSAI and a frequency band, for example, a frequency band may support only one or more pieces of S-NSSAI, when the UE performs cell reselection, the network side may generate a corresponding radio access technology (radio access technology, RAT)/frequency selection priority index (RAT/frequency selection priority index, RFSP index) based on allowed NSSAI and target (target) NSSAI to prevent the UE from continuous cell reselection attempts. However, when S-NSSAI is a restricted slice, the slice has timeliness and regionality, and a generated RFSP index is no longer accurate. Alternatively, when S-NSSAI is unavailable, a corresponding RFSP index may still redirect the UE to a corresponding cell. Alternatively, when S-NSSAI is available, a corresponding RFSP index may still fail to redirect the UE to a corresponding cell. For example, when the UE belongs to the partially allowed NSSAI, a current policy control function (policy control function, PCF) network element cannot generate a corresponding RFSP index for allowed NSSAI.

### SUMMARY

According to a communication method and a communication apparatus in embodiments of this application, an access and mobility management (access and mobility management, AM) policy can be accurately generated, and efficiency and accuracy of cell selection and reselection performed by UE can be improved.

According to a first aspect, an embodiment of this application provides a communication method. In the method, a policy control function network element obtains first information (which may also be referred to as "slice restriction information" in embodiments of this application) from one or more first network elements. The first information includes but is not limited to: at least one of S-NSSAI, a slice area of service for the S-NSSAI, and slice validity time for the S-NSSAI. The first information further includes at least one of the following information: partially allowed M pieces of S-NSSAI, where M is a positive integer; M supported tracking area lists that one-to-one correspond to the M pieces of S-NSSAI; partially rejected N pieces of S-NSSAI, where N is a positive integer; N supported or unsupported tracking area lists that one-to-one correspond to the N pieces of S-NSSAI; and alternative S-NSSAI. The policy control function network element generates an access and mobility management (access and mobility management, AM) policy based on the first information. The policy control function network element sends the AM policy to an access and mobility management function network element.

In the method, the PCF may obtain the slice restriction information before generating the policy, allowing the generation of the policy to take the slice restriction information into consideration. This can ensure accuracy of the generated policy, and ensure efficiency and accuracy of cell selection or reselection performed by UE.

In a possible design, the AM policy indicates an RFSP index. Alternatively, the AM policy indicates an RFSP index and RFSP restriction information, and the RFSP restriction information indicates at least one of validity time information corresponding to the RFSP index and area of service information corresponding to the RFSP index.

In this design, the AM policy generated by the PCF includes the RFSP index, and may indicate the UE to perform cell selection or reselection based on the RFSP index, so that the efficiency of the cell selection or reselection can be improved. In addition to the RFSP index, the AM policy generated by the PCF may further include the RFSP restriction information, so that a more accurate AM policy can be further obtained, and a real-time update operation can be avoided.

In a possible design, the first network element may be an access and mobility management function network element. In this design, the PCF may alternatively obtain the slice restriction information from the AMF, so that the slice restriction information can be considered when the policy is generated, and the accuracy of the generated policy can be ensured, and the efficiency and the accuracy of cell selection or reselection performed by the UE can be ensured. When the first network element is the access and mobility management function network element, before that the policy control function unit obtains the first information from the one or more first network elements, the method further includes: The policy control function network element sends a trigger to the access and mobility management function network element based on the first information. The trigger indicates the access and mobility management function network element to send updated information content to the policy control function network element when detecting that information content of the first information changes.

In this design, the PCF sets, on the AMF, the trigger corresponding to a trigger condition, so that the AMF can report the changed information content in time when detecting that the trigger condition is met. In this way, the PCF can update the policy in the timely manner, thereby improving accuracy and timeliness of the policy.

In a possible design, the AM policy indicates the RFSP restriction information, and the RFSP restriction information indicates at least one of the following: RFSP indexes associated with the partially allowed M pieces of S-NSSAI, RFSP indexes associated with the partially rejected N pieces of S-NSSAI, and an RFSP index of the alternative S-NSSAI.

In this design, an information form of the AM policy is not limited in embodiments of this application, and the AM policy may be carried in any possible form like a form in which an information element is added, a form in which information is added, or a combination form. In this way, more application scenarios can be met.

In a possible design, the S-NSSAI is subscribed S-NSSAI. In this way, the S-NSSAI is considered from a perspective of the UE, and the subscribed S-NSSAI is selected, so that the accuracy of cell selection and reselection performed by the UE can be further improved.

In a possible design, the first network element may be the access and mobility management function network element, a unified data repository network element, a unified data management network element, or the policy control function network element. It may be understood that the slice restriction information may be preconfigured in the unified data repository network element, the unified data management network element, or the policy control function network element.

In this design, the PCF network element may obtain the slice restriction information in a plurality of ways, so that the slice restriction information can be considered when the policy is generated, and the accuracy of the generated policy can be ensured, and the efficiency and the accuracy of cell selection or reselection performed by the UE can be ensured.

According to a second aspect, an embodiment of this application further provides a communication method. In the method, an access and mobility management function network element receives an access and mobility management AM policy sent by a policy control function network element. The access and mobility management function network element sends second information to an access network device. The second information indicates the AM policy, and indicates the access network device to perform access of a terminal device based on the AM policy. The AM policy is generated by the policy control function network element based on one or more pieces of obtained first information (which may also be understood as "slice restriction information" described in embodiments of this application). The first information includes at least one of the following: single network slice selection assistance information S-NSSAI, a slice area of service for the S-NSSAI, and slice validity time for the S-NSSAI. The first information further includes at least one of the following information: partially allowed M pieces of S-NSSAI, where M is a positive integer; M supported tracking area lists that one-to-one correspond to the M pieces of S-NSSAI; partially rejected N pieces of S-NSSAI, where N is a positive integer; N supported or unsupported tracking area lists that one-to-one correspond to the N pieces of S-NSSAI; and alternative S-NSSAI.

In a possible design, the AM policy indicates an RFSP index, and the second information includes the RFSP index. Alternatively, the AM policy indicates an RFSP index and RFSP restriction information, the RFSP restriction information indicates at least one of validity time information corresponding to the RFSP index and area of service information corresponding to the RFSP index, and the second information includes the RFSP index and the RFSP restriction information.

In a possible design, before that the access and mobility management function network element receives the AM policy sent by the policy control function network element, the method further includes: receiving a trigger sent by the policy control function network element; and performing information monitoring based on the trigger, and sending third information to the policy control function network element upon detection that a trigger condition corresponding to the trigger is met is detected. The third information includes at least one of S-NSSAI, a slice area of service for the S-NSSAI, and slice validity time for the S-NSSAI. The third information further includes at least one of the following information: partially allowed M pieces of S-NSSAI, where M is a positive integer; M supported tracking area lists that one-to-one correspond to the M pieces of S-NSSAI; partially rejected N pieces of S-NSSAI, where N is a positive integer; N supported or unsupported tracking area lists that one-to-one correspond to the N pieces of S-NSSAI; and alternative S-NSSAI. The trigger condition indicates that information content of the third information changes.

In a possible design, the AM policy further indicates the RFSP restriction information, and the RFSP restriction information indicates at least one of the following: RFSP indexes associated with the partially allowed M pieces of S-NSSAI, RFSP indexes associated with the partially rejected N pieces of S-NSSAI, and an RFSP index of the alternative S-NSSAI.

In a possible design, before that the access and mobility management function network element receives the AM policy sent by the policy control function network element, the method further includes: The access and mobility management function network element sends fourth information to the policy control function network element when detecting that S-NSSAI is available. The fourth information indicates that the S-NSSAI is allowed S-NSSAI.

According to a third aspect, an embodiment of this application further provides a communication method. In the method, an access network device receives first information sent by an access and mobility management function network element. The first information indicates an AM policy generated by a policy control function network element. The access network device performs access of a terminal device based on the AM policy indicated in the first information. The AM policy is generated by the policy control function network element based on one or more pieces of obtained second information (which may also be understood as "slice restriction information" described in embodiments of this application). The second information includes at least one of the following: single network slice selection assistance information S-NSSAI, a slice area of service for the S-NSSAI, and slice validity time for the S-NSSAI. The first information further includes at least one of the following information: partially allowed M pieces of S-NSSAI, where M is a positive integer; M supported tracking area lists that one-to-one correspond to the M pieces of S-NSSAI; partially rejected N pieces of S-NSSAI, where N is a positive integer; N supported or unsupported tracking area lists that one-to-one correspond to the N pieces of S-NSSAI; and alternative S-NSSAI.

In a possible design, the AM policy indicates an RFSP index. Alternatively, the AM policy indicates an RFSP index and RFSP restriction information, and the RFSP restriction information indicates at least one of validity time information corresponding to the RFSP index and area of service information corresponding to the RFSP index.

According to a fourth aspect, an embodiment of this application provides a communication apparatus. The apparatus may have a function of implementing the core network element or the access network device according to any one of the foregoing aspects or the possible designs of the foregoing aspects. The apparatus may be a device, or may be a chip included in the device. Functions of the communication apparatus may be implemented by hardware, or may be implemented by hardware executing corresponding software. The hardware or software includes one or more modules, units, or means (means) corresponding to the foregoing functions. In a possible design, a structure of the apparatus includes a processing module and a transceiver module. The processing module is configured to support the apparatus to implement a function of the core network element according to any one of the foregoing aspects or the possible designs of the foregoing aspects. The transceiver module is configured to support communication between the apparatus and another core network element. The communication apparatus may further include a storage module. The storage module is coupled to the processing module, and stores program instructions and data that are necessary for the apparatus. In an example, the processing module may be a processor, the communication module may be a transceiver, the storage module may be a memory, and the memory may be integrated with the processor, or may be disposed separately from the processor.

In some embodiments, when the apparatus is a policy control function network element, the transceiver module is configured to obtain first information from one or more first network elements. The first information includes at least one of the following: single network slice selection assistance information S-NSSAI, a slice area of service for the S-NSSAI, and slice validity time for the S-NSSAI. The first information further includes at least one of the following information: partially allowed M pieces of S-NSSAI, where M is a positive integer; M supported tracking area lists that one-to-one correspond to the M pieces of S-NSSAI; partially rejected N pieces of S-NSSAI, where N is a positive integer; N supported or unsupported tracking area lists that one-to-one correspond to the N pieces of S-NSSAI; and alternative S-NSSAI. The processing module is configured to generate an access and mobility management AM policy based on the first information. The transceiver module is further configured to send the AM policy to an access and mobility management function network element.

In some other embodiments, when the apparatus is an access and mobility management function network element, the transceiver module is configured to receive an AM policy sent by a policy control function network element. The transceiver module is further configured to send second information to an access network device. The second information indicates the AM policy, and indicates the access network device to perform access of a terminal device based on the AM policy. The AM policy is generated by the policy control function network element based on one or more pieces of obtained first information, and the first information includes: at least one of S-NSSAI, a slice area of service for the S-NSSAI, and slice validity time for the S-NSSAI. The first information further includes at least one of the following information: partially allowed M pieces of S-NSSAI, where M is a positive integer; M supported tracking area lists that one-to-one correspond to the M pieces of S-NSSAI; partially rejected N pieces of S-NSSAI, where N is a positive integer; N supported or unsupported tracking area lists that one-to-one correspond to the N pieces of S-NSSAI; and alternative S-NSSAI.

In still some embodiments, when the apparatus is an access network device, the transceiver module is configured to receive first information sent by an access and mobility management function network element. The first information indicates an AM policy generated by a policy control function network element. The processing module is configured to perform access of a terminal device based on the AM policy indicated in the first information. The AM policy is generated by the policy control function network element based on one or more pieces of obtained second information. The second information includes at least one of S-NSSAI, a slice area of service for the S-NSSAI, and slice validity time for the S-NSSAI. The first information further includes at least one of the following information: partially allowed M pieces of S-NSSAI, where M is a positive integer; M supported tracking area lists that one-to-one correspond to the M pieces of S-NSSAI; partially rejected N pieces of S-NSSAI, where N is a positive integer; N supported or unsupported tracking area lists that one-to-one correspond to the N pieces of S-NSSAI; and alternative S-NSSAI.

In another possible design, a structure of the apparatus includes a processor, and may further include a memory. The processor is coupled to the memory, and may be configured to execute computer program instructions stored in the memory, to cause the apparatus to perform the method according to any one of the foregoing aspects or the possible designs of the aspects. Optionally, the apparatus further includes a communication interface, and the processor is coupled to the communication interface. When the apparatus is a device of a core network element, the communication interface may be a transceiver or an input/output interface. When the apparatus is a chip included in a device of a core network element, the communication interface may be an input/output interface of the chip. Optionally, the transceiver may be a transceiver circuit, and the input/output interface may be an input/output circuit.

According to a fifth aspect, an embodiment of this application provides a chip system, including a processor. The processor is coupled to a memory, the memory is configured to store a program or instructions, and when the program or the instructions are executed by the processor, the chip system is caused to implement the method according to any one of the foregoing aspects or the possible designs of the aspects.

Optionally, the chip system further includes an interface circuit, and the interface circuit is configured to exchange code instructions with the processor.

Optionally, there may be one or more processors in the chip system, and the processor may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a non-transitory processor, for example, a read-only memory (read-only memory, ROM). The memory and the processor may be integrated into a same chip, or may be separately disposed on different chips.

According to a sixth aspect, an embodiment of this application provides a computer-readable storage medium. The computer-readable storage medium stores a computer program or instructions, and when the computer program or the instructions are executed, a computer is caused to perform the method according to any one of the foregoing aspects or the possible designs of the aspects.

According to a seventh aspect, an embodiment of this application provides a computer program product. When a computer reads and executes the computer program product, the computer is caused to perform the method according to any one of the foregoing aspects or the possible designs of the aspects.

For beneficial effect of any one of the second aspect to the seventh aspect, specifically refer to the beneficial effect in the possible designs of the first aspect. Details are not described herein again.

### BRIEF DESCRIPTION OF DRAWINGS

FIG. 1A is a first diagram of a network architecture of a communication system to which this application is applicable;
FIG. 1B is a second diagram of a network architecture of a communication system to which this application is applicable;
FIG. 2A is a third diagram of a network architecture of a communication system to which this application is applicable;
FIG. 2B is a fourth diagram of a network architecture of a communication system to which this application is applicable;
FIG. 2C is a fifth diagram of a network architecture of a communication system to which this application is applicable;
FIG. 2D is a sixth diagram of a network architecture of a communication system to which this application is applicable;
FIG. 3A is a diagram of an eMBB scenario according to an embodiment of this application;
FIG. 3B is a diagram of an mMTC scenario according to an embodiment of this application;
FIG. 3C is a diagram of an architecture of a 5G network slice according to an embodiment of this application;
FIG. 3D is a diagram of a scenario of a 5G network slice according to an embodiment of this application;
FIG. 3E is a diagram of network slices and network slice instances according to an embodiment of this application;
FIG. 3F is a diagram of S-NSSAI according to an embodiment of this application;
FIG. 3G is a schematic flowchart of slice selection in a registration procedure of UE according to an embodiment of this application;
FIG. 4 is a first schematic flowchart of a communication method applicable to an embodiment of this application;
FIG. 5 is a second schematic flowchart of a communication method applicable to an embodiment of this application;
FIG. 6 is a third schematic flowchart of a communication method applicable to an embodiment of this application; and
FIG. 7, FIG. 8, or FIG. 9 is a diagram of a structure of a communication apparatus according to an embodiment of this application.

### DESCRIPTION OF EMBODIMENTS

The following describes some terms in this application, to facilitate understanding of a person skilled in the art.
(1) A base station is a device that connects a terminal device to a wireless network in a communication system. As a node in a radio access network, the base station may also be referred to as a network device, or may be referred to as a radio access network (radio access network, RAN) node (or device) or an access network (access network, AN) node (or device), or may be referred to as an access point (access point, AP). Currently, some examples of the base station include: a next-generation NodeB (generation NodeB, gNB), a transmission reception point (transmission reception point, TRP), an evolved NodeB (evolved NodeB, eNB), a radio network controller (radio network controller, RNC), a NodeB (NodeB, NB), an access point (access point, AP), a base station controller (base station controller, BSC), a base transceiver station (base transceiver station, BTS), a home base station (for example, a home evolved NodeB or a home NodeB, HNB), a baseband unit (baseband unit, BBU), an enterprise LTE discrete spectrum aggregation (enterprise LTE discrete spectrum aggregation, eLTE-DSA) base station, and the like.

In some possible scenarios, the RAN device is mainly a wireless network device in a 3rd generation partnership project (3rd generation partnership project, 3GPP) network. The RAN device is mainly responsible for functions on an air interface side, for example, radio resource management, quality of service (quality of service, QoS) management, and data compression and encryption. The RAN device may include base stations in various forms, for example, a macro base station, a micro base station (also referred to as a small cell), a relay station, and an access point. In systems that use different radio access technologies, names of a device that has a base station function may be different. For example, in a 5th generation (5th generation, 5G) system, the device is referred to as a RAN, a next generation NodeB (generation NodeB, gNB), or a 5G NodeB (5G NodeB, 5G NB); in an LTE system, the device is referred to as an evolved NodeB (evolved NodeB, eNB) or an eNodeB; and in a 3rd generation (3rd generation, 3G) system, the device is referred to as a NodeB (NodeB).

In some other possible scenarios, an AN device may be an access network device defined by non-3GPP. The AN device allows a non-3GPP technology to be used for interconnection and interworking between a terminal device and a 3GPP core network. For example, the non-3GPP technology is a wireless fidelity (wireless fidelity, Wi-Fi) network, a worldwide interoperability for microwave access (worldwide interoperability for microwave Access, WiMAX) network, or a code division multiple access (code division multiple access, CDMA) network.

In addition, in a network structure, a base station may include a central unit (central unit, CU) node and a distributed unit (distributed unit, DU) node. In this structure, protocol layers of the base station are split. Functions of some protocol layers are centrally controlled by the CU, functions of some or all of remaining protocol layers are distributed in the DU, and the CU centrally controls the DU.

(2) A terminal device is a device that provides voice and/or data connectivity for users. The terminal device may also be referred to as user equipment (user equipment, UE), a mobile station (mobile station, MS), a mobile terminal (mobile terminal, MT), or the like. The terminal device and an access network device communicate with each other by using an air interface technology.

For example, the terminal device may be a handheld device, a vehicle-mounted device, or a road side unit that has a wireless connection function. Currently, examples of some terminal devices are: a mobile phone (mobile phone), a tablet computer, a notebook computer, a subscriber unit (subscriber unit), a palmtop computer, a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone) or a wireless local loop (wireless local loop, WLL) station, a machine type communication (machine type communication, MTC) device, a mobile internet device (mobile internet device, MID), a smart point of sale (point of sale, POS) terminal, a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), various smart meters (a smart water meter, a smart electricity meter, and a smart gas meter), a vehicle-mounted electronic control unit (electronic control unit, ECU), a vehicle-mounted computer, a vehicle-mounted cruise system, a telematics box (telematics box, T-BOX), and the like.

(3) The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

It should be noted that "a plurality of" in this application means two or more than two. "At least one" means one or more.

In addition, it should be understood that, in the descriptions of this application, terms such as "first" and "second" are merely used for distinguished description, which cannot be understood as an indication or implication of relative importance, and cannot be understood as an indication or implication of a sequence.

The following describes in detail embodiments of this application with reference to accompanying drawings.

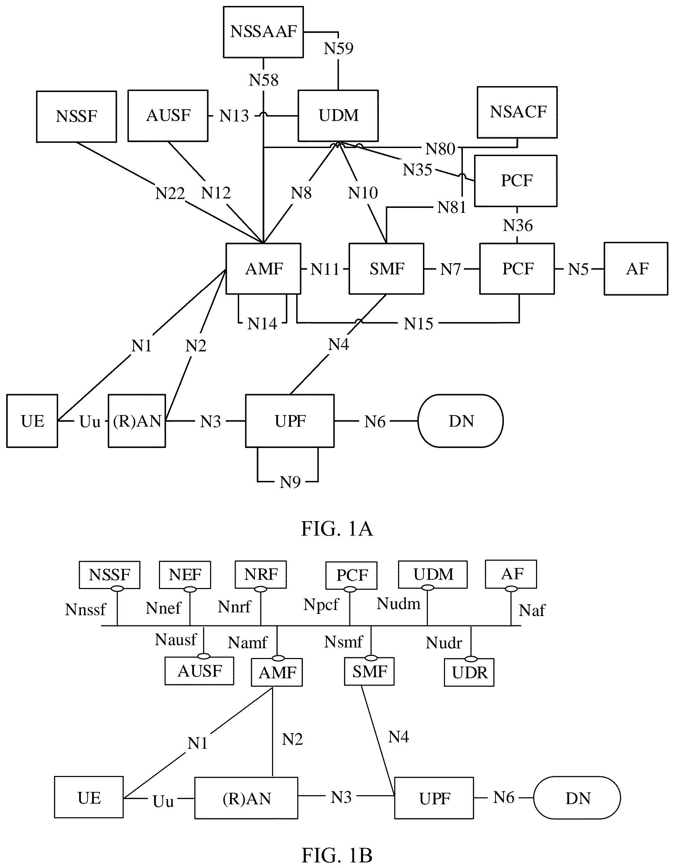

A communication method provided in embodiments of this application is applicable to a mobile communication system. Mobile communication systems may be classified into a non-roaming architecture and a roaming architecture. Architectures of mobile communication systems with non-roaming architectures are shown in FIG. 1A and FIG. 1B. FIG. 1A is a system architecture based on reference points, and FIG. 1B is a system architecture based on service-based interfaces.

Refer to FIG. 1A and FIG. 1B. The mobile communication systems include three parts: a terminal device, a mobile communication network, and a data network (data network, DN). The following describes functions and entities of each part in detail with reference to the accompanying drawings.

The terminal device, which may also be referred to as UE for short, is a user-side entity capable of receiving and transmitting radio signals, and needs to access a DN through the mobile communication network, to implement its services of the UE. The UE can be any device that provide voice and/or data connectivity for users. This is not limited in this application.

The DN, also known as a packet data network (packet data network, PDN), is a network located outside the mobile communication network. The DN may be deployed with a plurality of services, and may provide the UE with services such as a data service and/or a voice service. The mobile communication network may access at least one DN, and a same DN may also be accessed by at least one mobile communication network. For example, the DN may be the internet (internet), an IP multimedia service (IP multimedia service, IMS) network, a data network dedicated to some applications, an Ethernet, an IP local network, or the like. This is not limited in this application.

The mobile communication network is deployed and maintained by operators, and provides an access service and an end-to-end connection service for UE. The UE may access the DN through the mobile communication network, to implement specific services. The mobile communication network may further include two parts: a (radio) access network ((radio) access network, (R)AN) and a core network (core network, CN). When the UE requests to access the DN, the mobile communication network may establish PDU sessions between the UE and the DN, to achieve mutual communication between the UE and the DN.

The (R)AN is mainly responsible for a radio access function of UE, and the function of the (R)AN may be specifically implemented by a base station. The base station is a network-side entity capable of receiving and transmitting radio signals, is responsible for providing a radio access-related service for UE in coverage of the base station, and implements a physical layer function, resource scheduling and radio resource management, quality of service (quality of service, QoS) management, radio access control, user plane data forwarding, and a mobility management function. The base station and the UE implement air interface transmission through a Uu interface.

The CN is responsible for connecting UE to different data networks based on a call request or a service request sent by the UE through an access network, and performing services such as charging, mobility management, and session management. Based on specific logical function division, the CN may be divided into a control plane (control plane, CP) and a user plane (user plane, UP). Network elements responsible for a control plane function in the CN may be collectively referred to as control plane network elements, and network elements responsible for a user plane function may be collectively referred to as user plane network elements. The following describes in detail functions of main network elements in the core network.

The user plane network element, namely, a user plane function (user plane function, UPF) network element, is referred to as a UPF for short, and is mainly responsible for forwarding and receiving user plane data of UE. The user plane network element may receive the user plane data from the DN, and transmit the user plane data to the UE through the base station. The user plane network element may further receive the user plane data from the UE through the base station, and forward the user plane data to the DN. Transmission resources and scheduling functions on the user plane network element that provide services for the UE is managed and controlled by the control plane network element.

Control plane network elements include an access and mobility management function (access and mobility management function, AMF) network element, a session management function (session management function, SMF) network element, a policy control function (policy control function, PCF) network element, an authentication server function (authentication server function, AUSF) network element, a network slice admission control function (network slice admission control function, NSACF) network element, a network slice-specific and stand-alone non-public network (stand-alone non-public network, SNPN) authentication and authorization function (NSSAAF) network element, a network exposure function (network exposure function, NEF) network element, a unified data repository (unified data repository, UDR) network element, a unified data management (unified data management, UDM) network element, and an application function (application function, AF) network element, and the like. The following briefly describes each control plane network element.

The AMF network element may be referred to as AMF for short, and is mainly responsible for mobility management, access authentication/authorization, and signaling processing in the mobile communication network, for example, functions such as access control, UE location update, UE registration, registration, and deregistration, SMF selection, and the like. In addition, the AMF is further responsible for transferring user policies between the UE and the PCF.

The SMF network element may be referred to as an SMF for short, and is mainly responsible for session management, for example, session establishment, modification, and release, in the mobile communication network. Specifically, functions of the SMF include UPF selection, UPF redirection, internet protocol (internet protocol, IP) address allocation, bearer establishment, modification and release, QoS control, and the like.

The PCF network element may be referred to as a PCF for short, and is mainly responsible for providing a unified policy framework to govern network behavior, providing policy rules for other control plane network elements, and obtaining policy-related user subscription information.

The AUSF network element may be referred to as an AUSF for short, and is mainly responsible for providing an authentication function and supporting authentication of 3GPP access and non-3GPP access.

The NEF network element may be referred to as a NEF for short, mainly supports secure interaction between the mobile communication network and a third-party application, and can securely expose network capabilities and events to a third party, to enhance or improve quality of service of the application. The mobile communication network may also securely obtain related data from the third party through the NEF network element to enhance intelligent decision-making of the network.

The UDR network element may be referred to as a UDR for short, and is mainly responsible for storage of data like UE subscription data, policy data, application data, and the like.

The UDM network element may be referred to as a UDM for short, and is mainly responsible for storage and management of the subscription data of the UE, performing user access authorization, generation of authentication credentials, and user identification handling (for example, storage and management of subscriber permanent identifiers).

The AF network element may be referred to as an AF for short, mainly transmits application-side requirements for a network side, and supports interaction with other network elements in the core network to provide services, for example, influencing data routing decisions, a policy control function, or providing some third-party services for the network side. The AF network element may be a third-party functional entity or an application service deployed by the operator.

The NSSF network element may be referred to as an NSSF for short, and is mainly responsible for selection of network slices.

The NSACF network element may be referred to as an NSACF for short, is mainly responsible for monitoring and controlling the number of registered users per network slice, monitoring and controlling the number of PDU sessions established per network slice, and support of event-based network slice status notification, reports to another NF, and the like.

The NSSAAF network element may be referred to as an NSSAAF for short, and is mainly responsible for supporting the following functions: support of specific identity authentication and authorization for specified network slices via an authentication, authorization, and accounting server (authentication, authorization, and accounting server, AAA-S). If the AAA-S is a third-party server, the NSSAAF may contact the AAA-S via an AAA proxy (AAA-P). Access to an SNPN based on a credential of the AAA server (AAA-S) is supported. If the credential belongs to a third-party holder, the NSSAAF may contact the AAA server via the AAA proxy (AAA-P).

The DN refers to a service network that provides data transmission services for users, for example, the IP multimedia service (IP multimedia service, IMS) network or the internet. In addition, UE accesses the DN based on the PDU session established between the UE and the DN.

It should be understood that the foregoing network elements in the CN may be network elements implemented on dedicated hardware, may be software instances running on dedicated hardware, or may be instances of virtualization functions on a virtualization platform (for example, a cloud platform). In addition, distribution forms of the network elements in the communication system are not limited in embodiments of this application. Optionally, the network elements may be separately deployed in different physical devices, or a plurality of network elements are integrated into a same physical device.

In addition, FIG. 1A further shows an interaction relationship between network function entities in the mobile communication system and corresponding interfaces. FIG. 1B further shows service-based interfaces used between some network function entities in the mobile communication system.

It should be noted that the mobile communication system shown in FIG. 1A or FIG. 1B does not constitute any limitation on the mobile communication system to which embodiments of this application are applicable. Therefore, the communication method provided in embodiments of this application is further applicable to communication systems of various standards, for example, a long term evolution (long term evolution, LTE) communication system, a 5th generation (5th generation, 5G) communication system, a 6th generation (6th generation, 6G) communication system, and a future communication system.

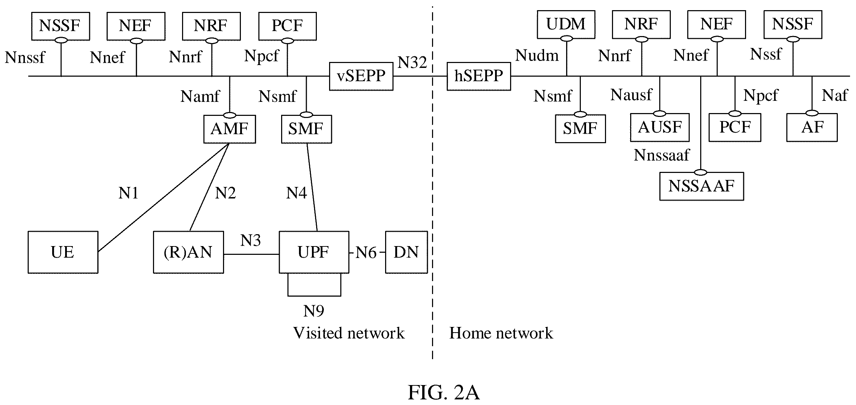

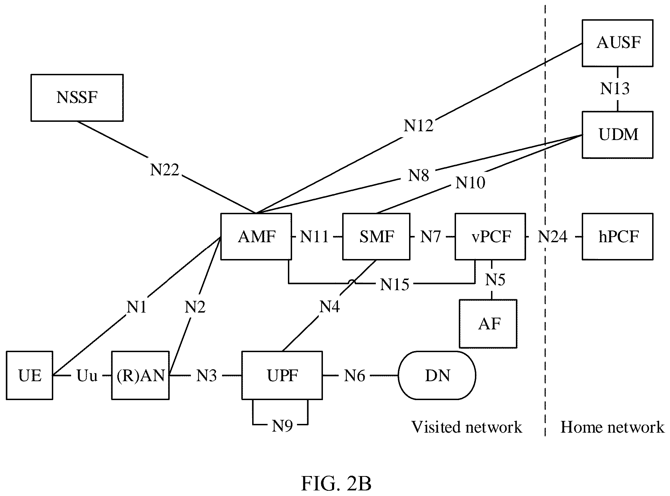

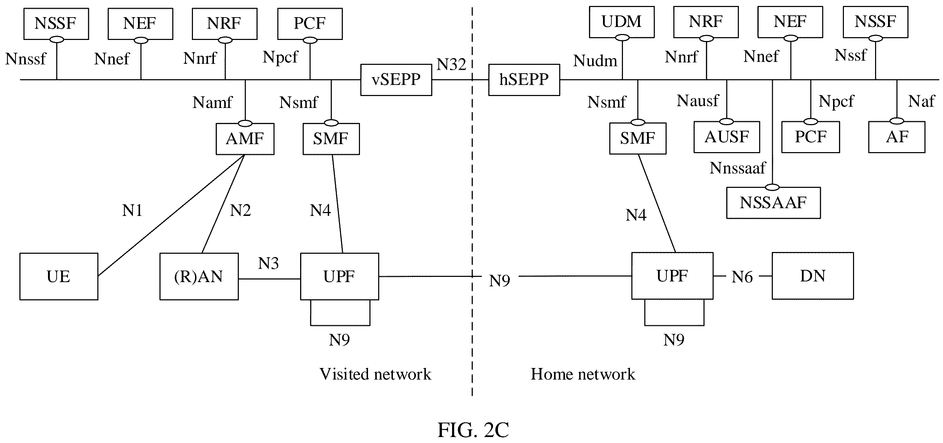

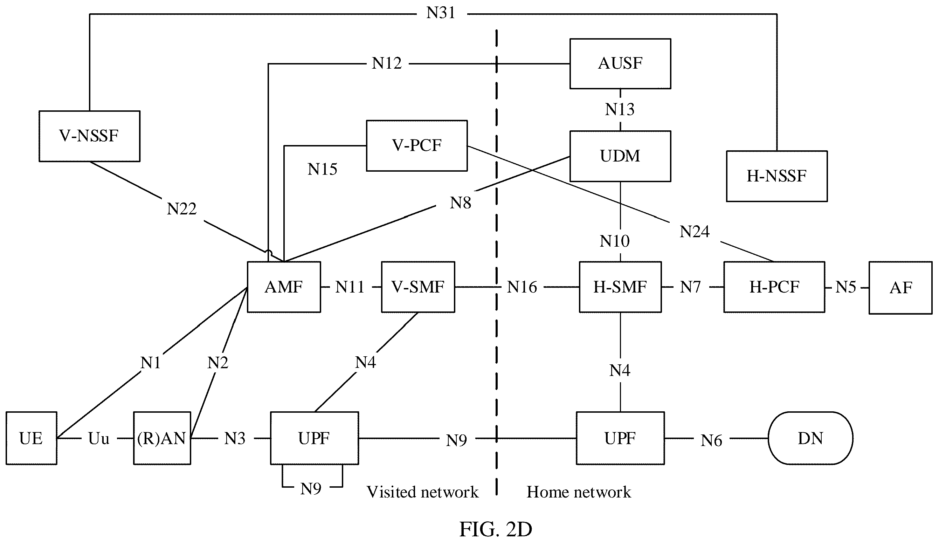

In addition, FIG. 1A or FIG. 1B does not limit communication scenarios of the mobile communication system. In addition to non-roaming scenarios shown in FIG. 1A and FIG. 1B, this application can be further applicable to various roaming scenarios. For example, according to a roaming service access policy of a mobile terminal, there may be two roaming modes: local breakout (local breakout, LBO) roaming access and home routed (home routed, HR) roaming access. FIG. 2A and FIG. 2B show structures of mobile communication systems in an LBO roaming scenario. FIG. 2A is a system structure based on service-based interfaces, and FIG. 2B is a system architecture based on reference points. FIG. 2C and FIG. 2D show structures of mobile communication systems in an HR roaming scenario. FIG. 2C is a system structure based on service-based interfaces, and FIG. 2D is a system architecture based on reference points. For network function entities included in the mobile communication systems in FIG. 2A to FIG. 2D and corresponding interfaces, refer to description content in FIG. 1A and FIG. 1B. Details are not described herein again.

FIG. 2A is used as an example for description. FIG. 2A shows another possible network architecture to which an embodiment of this application is applicable. The network architecture includes a visited network and a home network of a terminal device, and the visited network and the home network coexist and communicate with each other.

The visited network may be a visited public land mobile network (public land mobile network, PLMN) or a visited non-public network (non-public network, NPN). The visited network indicates a network accessed by the terminal device in a current area. The visited network and the home network may be a same network, or may be different networks. In other words, mobile country code (mobile country code, MCC) and mobile network code (mobile network code, MNC) included in an international mobile subscriber identity (international mobile subscriber identity, IMSI) of a user on the terminal device may not be completely the same as MCC and MNC in the visited network. For the terminal device, after coverage of a currently accessed visited network is lost, another accessible network may be selected as a new visited network.

The home network may be a home PLMN, or may be a home NPN, indicating a home network of a user. In other words, the MCC and the MNC included in the IMSI of the user on the terminal device are consistent with MCC and MNC in the home network. For a user, there is only one home network of the user.

As shown in FIG. 2A, the visited network may communicate with a home security edge protection proxy (home security edge protection proxy, hSEPP) in the home network via a visited security edge protection proxy (visited security edge protection proxy, vSEPP). The vSEPP and the hSEPP establish a connection through an N32 interface and implement a protection policy, to process each control plane message in cross-network signaling. The vSEPP and the hSEPP can enhance internal security of networks, and can ensure security of control plane information across the networks, thereby preventing the networks in which the SEPPs are located from external attacks.

In addition, in the home network, authentication and authorization based on network handover selection may be implemented by using a network slice-specific authentication and authorization function (network slice-specific authentication and authorization function, NSSAAF).

Finally, it should be further noted that names of the network elements in the mobile communication system are not limited in embodiments of this application either. For example, in mobile communication systems of different standards, network elements may have other names. For another example, when a plurality of network elements are integrated into a same physical device, the physical device may alternatively have another name.

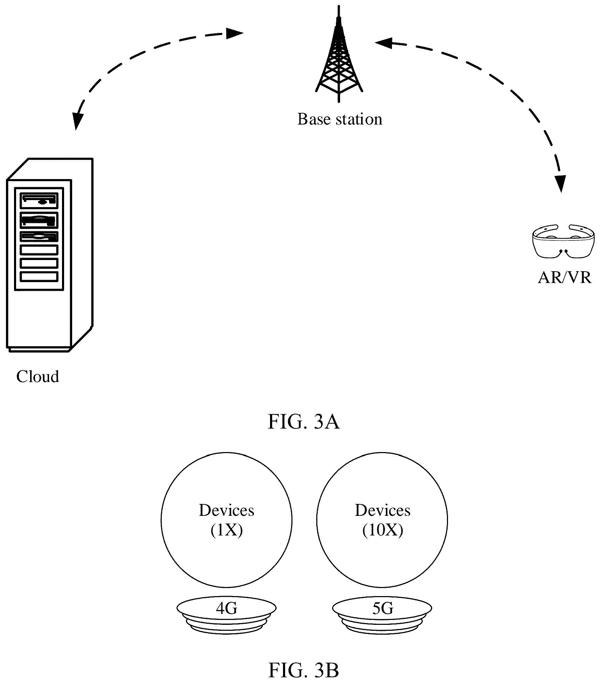

In the 5G era, hundreds of billions of internet of things devices access a network, different types of application scenarios have different requirements on the network, and requirements of some of the scenarios may even conflict. If a single network is used to provide services for different types of application scenarios, a network architecture is extremely complex, and network management efficiency and resource utilization efficiency are low. For example, 5G can support three scenarios: enhanced mobile broadband (enhanced mobile broadband, eMBB), massive machine-type communication (massive machine-type communication, mMTC), and ultra-reliable low-latency communication (ultra-reliable low-latency communication, uRLLC). The three scenarios include diversified and differentiated applications.
(1) In the eMBB scenario, an enhanced mobile broadband service can be provided, which makes breakthroughs in spectrum utilization and bandwidth technologies on a wireless side. 5G can provide a transmission rate 10 times faster than 4G. For popular augmented reality (augmented reality, AR), virtual reality (virtual reality, VR), and high-definition video streaming, only an ultra-high rate of 5G can meet requirements, and a transmission rate of 4G cannot meet the requirements. Currently, when the VR is used to watch a high-definition video or play a large interactive game, data needs to be obtained through a network cable. In the future, a wireless connection is performed via a 5G network, and quick experience can be obtained for the VR/AR. For example, FIG. 3A is a diagram of an eMBB scenario.
(2) In the mMTC scenario, a massive machine-type communication service may be provided, and technologies such as multi-user shared access and a heterogeneous ultra-dense network may be implemented. 5G can support access of about 1 million devices per square kilometer, which is about 10 times that of 4G. For example, FIG. 3B is a diagram of an mMTC scenario. With rapid development of smart cities, public facilities such as street lamps, manhole covers, and water meters have network connection capabilities and can be remotely managed. However, 5G will be more innovative. With a powerful connection capability of the 5G network, public devices in various industries in a city can be connected to an intelligent management platform. These public facilities collaborate with each other through the 5G network and can be managed by a small quantity of maintenance personnel, so that operation efficiency of the city is greatly improved.
(3) In the uRLLC scenario, ultra-reliable low-latency communication may be provided. A most typical application in a 5G scenario is autonomous driving. In most common scenarios such as emergency braking, vehicle-to-vehicle, vehicle-to-pedestrian, and vehicle-to-infrastructure of autonomous driving, multi-channel communication is performed simultaneously, and a large amount of data needs to be processed and decisions need to be made instantly. Therefore, a network requires ultra-high bandwidth, an ultra-low latency, and high reliability. The 5G network has a capability to deal with these scenarios.

In the 4G era, a single network is used to meet all application scenarios and customer groups. For example, to provide a narrowband internet of things (narrowband internet of things, NB-IoT) capability, a corresponding NB feature is enabled on a network element. To build network reliability, a network element device-level redundancy backup is added and features are continuously overlaid to meet requirements of a mass market. However, services in a vertical industry have different and unpredictable requirements in terms of latency, connection quantity, reliability, security, and the like. For example, an AR service requires ultra-bandwidth higher than 1600 megabits per second (Mbps), a power meter reading service requires a network to provide massive connections, and autonomous driving requires a low end to end latency at a millisecond level and high reliability of over 99.999%. It is impossible to address all these requirements and future requirements over one network.

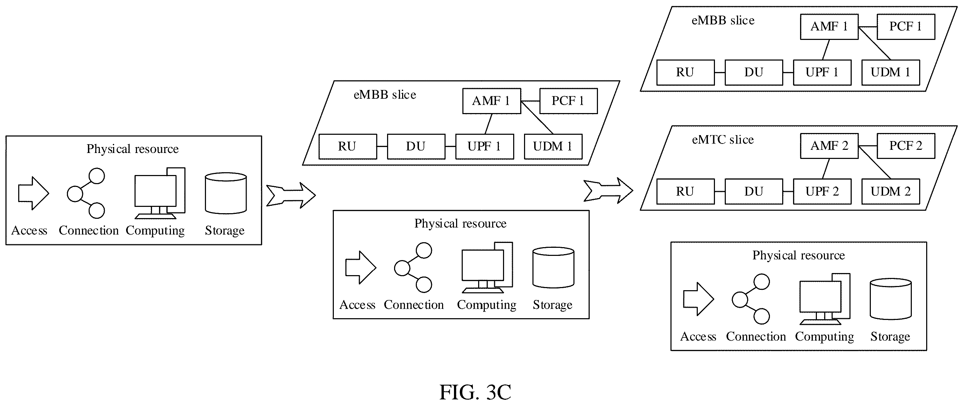

Therefore, in the 5G network, a network slicing technology emerges, enabling the creation of multiple virtual networks over a set of hardware infrastructure, and allocating resources on demand to meet different requirements of various services. When a current network cannot meet emerging requirements, operators only need to virtualize new network slices for the requirements without affecting existing network slices, thereby expediting service deployment. Network slicing (network slicing) uses slicing technologies to create multiple virtual end-to-end networks on a generic hardware platform. Each network features distinct network functions that are tailored to the varying service requirements of different use cases. For example, FIG. 3C is a diagram of an architecture of a 5G network slice according to an embodiment of this application. It can be learned from FIG. 3C that, after purchasing a physical resource, an operator virtualizes an eMBB network slice for a mass internet access service based on the physical resource, and virtualizes an mMTC network slice based on the physical resource for smart meter reading requirements of some vendors in a vertical industry. The two network slices separately provide services for different service scenarios.

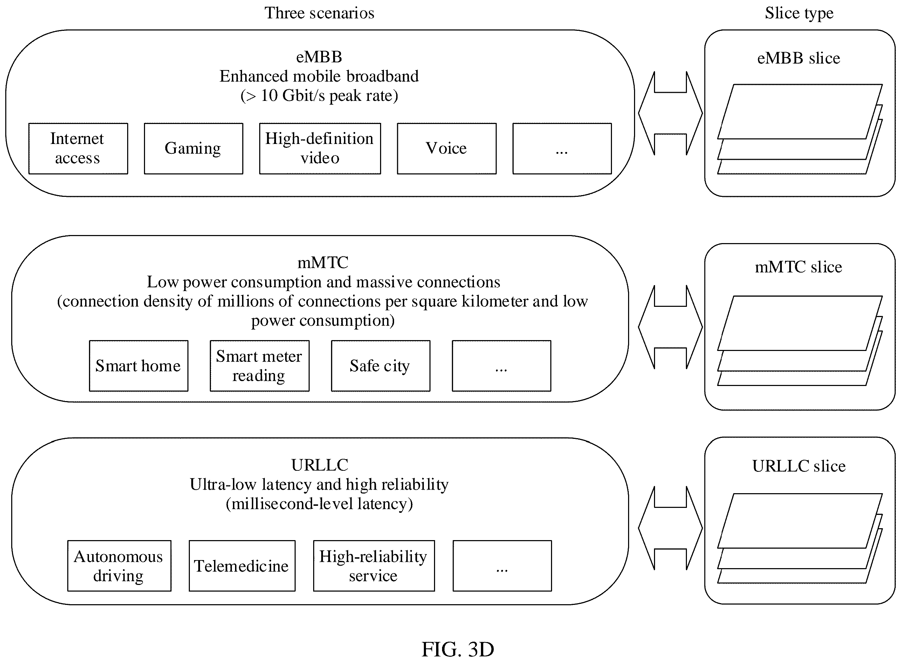

Although various industries in the vertical industry have various requirements for network functions, these requirements can be parsed into requirements on network functions such as network bandwidth, connection quantity, a latency, and reliability. The 5G standard also classifies network function requirements of different services into three typical scenarios. Network slice types corresponding to the three typical scenarios are an eMBB slice, an mMTC slice, and a uRLLC slice respectively. For example, FIG. 3D is a diagram of a scenario of a 5G network slice according to an embodiment of this application. It can be learned from FIG. 3D that an eMBB slice can be applied to service scenarios such as internet access, cloud gaming, a high-definition video, and voice, and can enhance mobile bandwidth, for example, can provide a rate greater than 10 gigabits per second (Gbps). An mMTC slice can be applied to service scenarios such as a smart home, smart meter reading, and a safe city, and can implement low power consumption and massive connections, for example, can implement a connection density of millions of connections per square kilometer and low power consumption. A uRLLC slice can be used in service scenarios such as autonomous driving, telemedicine, and a high-reliability service, and can provide an ultra-low latency and high reliability, for example, reduce the latency to milliseconds.

In addition, network slicing further features isolation, on-demand customization, and an end-to-end network. For example, the isolation is resource isolation, security isolation, or operations, administration, and maintenance (operations, administration, and maintenance, OAM) isolation, and different isolation technologies may be used for different domains. For example, the on-demand customization is providing a slice life cycle on demand, distributed deployment on demand, providing capacity on demand, and providing a network service on demand. The end-to-end network may include slice management systems like a RAN, a transport network, and a core network that need to cross domains.

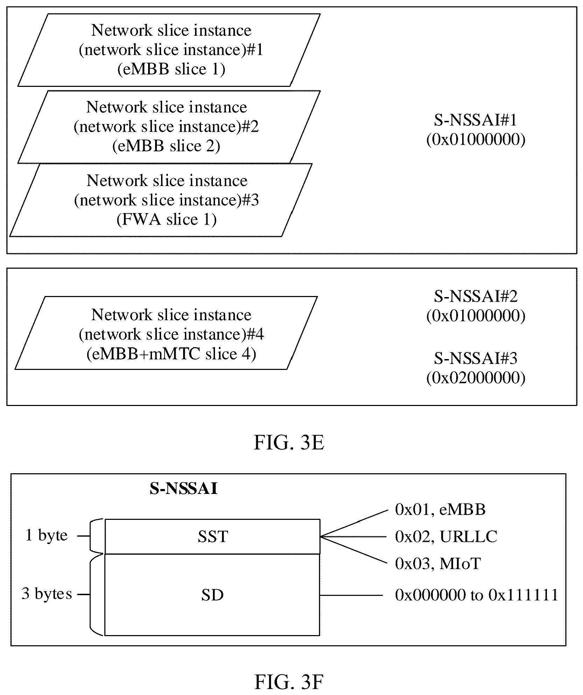

In addition, the network slice may be identified based on single network slice selection assistance information (single network slice selection assistance information, S-NSSAI). Based on operation or deployment requirements of an operator, a single piece of S-NSSAI may be associated with one or more network slice instances (network slice instance, NSI), and one network slice instance may be associated with one or more pieces of S-NSSAI. For example, FIG. 3E is a diagram of network slices and network slice examples according to an embodiment of this application. An eMBB slice 1, an eMBB slice 2, and an FWA slice 1 are all eMBB slices, and S-NSSAI values of the eMBB slice 1, the eMBB slice 2, and the FWA slice 1 are all Ox01000000. An eMBB+mMTC slice 4 may provide services for both an eMBB service and an mMTC service. Therefore, the eMBB+mMTC slice 4 is both an eMBB slice and an mMTC slice, and corresponding S-NSSAI values are: 0x01000000 and 0x02000000.

FIG. 3F is a diagram of S-NSSAI according to an embodiment of this application. It can be learned from FIG. 3F that the S-NSSAI includes two parts: a slice/service type (slice/service type, SST) and a slice differentiator (slice differentiator, SD). The SST is expected network slice behavior in terms of feature and service. A standard value range of the SST is 1, 2, and 3. The value 1 indicates an eMBB, the value 2 indicates uRLLC, and the value 3 indicates massive internet of things (massive internet of things, MIoT). The SD is optional information, and is used to supplement the SST to distinguish a plurality of network slices of a same slice/service type. In addition, a combination of the SST and the SD indicates a slice type and a plurality of slices of a same slice type. For example, values of the S-NSSAI being 0x01000000, 0x02000000, and 0x03000000 respectively indicate an eMBB slice, a uRLLC slice, and an MIoT slice. Values of the S-NSSAI being 0x01000001 and 0x01000002 respectively indicate that the eMBB slice serves a user group 1 and a user group 2.

Network slice selection assistance information (network slice selection assistance information, NSSAI) is a set of S-NSSAI. NSSAI in a 5G network may include requested NSSAI, allowed NSSAI, configured NSSAI, and target NSSAI. Specific definitions of the requested NSSAI, the allowed NSSAI, the configured NSSAI, and the target NSSAI are shown in Table 1.

**Table 1**

| NSSAI | Definition |
|---|---|
| Requested NSSAI | Requested NSSAI is NSSAI that UE expects to use. It is provided by the UE for a network side in a registration procedure, and includes a maximum of 8 S-NSSAIs. |
| Allowed NSSAI | Allowed NSSAI is provided by a serving PLMN to UE in a procedure like registration. It indicates an S-NSSAI value that can be used by the UE in a current registration area (a set of TAs) of the serving PLMN, and includes a maximum of 8 pieces of S-NSSAI. It is stored locally in the UE. |
| Configured NSSAI | Configured NSSAI is NSSAI that is applicable to one or more PLMNs. It is delivered by an AMF to UE based on messages such as a registration accept message or a configuration update command message, and includes a maximum of 16 pieces of S-NSSAI. It is stored locally in the UE. |
| Target NSSAI | Target NSSAI is NSSAI provided by the serving PLMN for an NG-RAN to enable the NG-RAN to attempt to guide the UE to a cell that supports a network slice of an S-NSSAI identifier in the NSSAI. |

In the registration procedure of the UE, a RAN selects an AMF (or an initial AMF) for the UE based on locally stored information and a registration request message of the UE. However, the initial AMF may not support a network slice to be used by the UE. For example, the initial AMF supports only an FWA network slice, but the UE requests an UeMBB network slice. If the initial AMF cannot serve the UE, the initial AMF queries an NSSF and selects a target AMF that supports a network slice of the UE, and directly or indirectly sends the registration request message of the UE to the target AMF. The target AMF processes the registration request of the UE, and provides a network service for the UE.

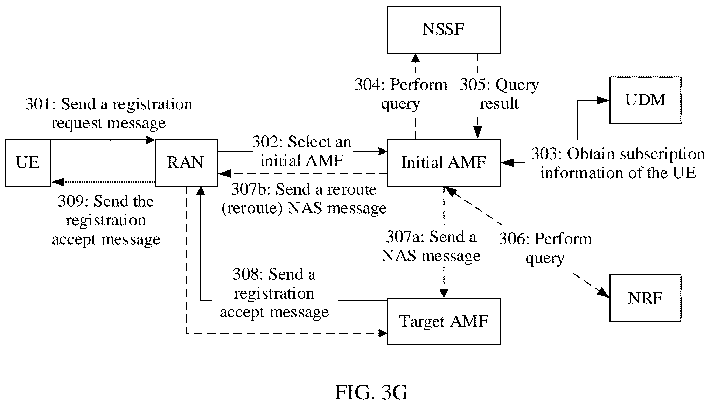

For example, FIG. 3G is a schematic flowchart of slice selection in a registration procedure of UE according to an embodiment of this application. The procedure may include the following steps.

Step 301: When registering with a PLMN based on an access type, the UE sends a registration request message to a RAN. If the UE stores configured NSSAI of the PLMN or allowed NSSAI that is of the access type and that is of the PLMN, the UE carries requested NSSAI information in a non-access stratum (non-access stratum, NAS) registration request message and an AN message. The requested NSSAI includes S-NSSAI of a slice that the UE expects to register with.

Step 302: The RAN selects the initial AMF based on a globally unique AMF identifier (globally unique AMF identifier, GUAMI) or the requested NSSAI. If the UE does not provide the requested NSSAI and the GUAMI in the AN message, the RAN sends the registration request message from the UE to a default AMF.

Step 303: The initial AMF queries a UDM to obtain subscription information of the UE, where the subscription information of the UE includes subscribed S-NSSAIs (English name: Subscribed S-NSSAIs). The initial AMF determines whether a service can be provided for the UE based on the received requested NSSAI and subscribed S-NSSAI, and a local configuration. If the AMF can serve the UE, the initial AMF is still a serving AMF of the UE. The AMF constructs the allowed NSSAI based on the subscribed S-NSSAI and the requested NSSAI, and sends the allowed NSSAI back to the UE through a registration accept message. If the initial AMF cannot serve the UE or cannot make a decision, the AMF needs to query the NSSF. S-NSSAI supported by each TA is configured on the AMF. The information is reported when the RAN establishes a connection to the AMF.

Step 304: The initial AMF sends information like the requested NSSAI, the subscribed S-NSSAI, a PLMN of an SUPI, and TAI to the NSSF for query.

Step 305: The NSSF selects, based on the received information and a local configuration, an AMF set (set) or a candidate AMF list that can serve the UE, allowed NSSAI applicable to the access type, a network slice instance serving the UE, and an NRF used for NF selection in the instance; and sends the query results to the initial AMF.

Step 306: If the initial AMF is not in the AMF set and AMF address information is not stored locally, the initial AMF queries the NRF to obtain the candidate AMF list. The NRF returns a list of a group of available AMFs, including an AMF pointer and address information. The initial AMF selects an AMF from the list as a target AMF. If the initial AMF cannot obtain the candidate AMF list by querying the NRF, the initial AMF needs to send the registration request message of the UE to the target AMF through the RAN. The message sent by the initial AMF to the RAN includes the AMF set and the allowed NSSAI.

Step 307a: If the initial AMF determines to directly send a NAS message to the target AMF based on a local policy and the subscription information, the initial AMF sends, to the target AMF, the UE registration request message and information, other than the AMF set, that is obtained from the NSSF.

Step 307b: If the initial AMF determines to forward the NAS message to the target AMF through the RAN based on the local policy and the subscription information, the initial AMF sends a reroute (reroute) NAS message to the RAN. The reroute NAS message includes target AMF set information, the registration request message, and related information that is obtained from the NSSF.

Step 308: After receiving the NAS message sent in step 307a, the target AMF continues to perform related steps of the registration procedure, and sends the registration accept message to the RAN, where the message carries information like the allowed NSSAI and rejected S-NSSAI. In addition, the AMF may send, to the RAN, the allowed NSSAI and an RFSP index corresponding to target NSSAI, so that the RAN redirects the UE to perform cell reselection.

Step 309: The RAN sends the registration accept message to the UE.

In addition, the UE can initiate a PDU session corresponding to a slice only when the slice is the allowed NSSAI.

Network slices are deployed for services in service areas. These service areas may not match TAs or currently allocated RAs. In addition, the network slices may be deployed within a specific time interval. Therefore, the following features are introduced in a current standard:
(1) partially allowed NSSAI (English: partially allowed NSSAI);
(2) partially rejected S-NSSAI (English: rejected S-NSSAIs partially in the RA);
(3) an area of service of S-NSSAI (English: S-NSSAI location availability information); and
(4) validity time for a network slice (validity time for an S-NSSAI).

When the slice is unavailable, the AMF may replace unavailable S-NSSAI with alternative S-NSSAI, and send the alternative S-NSSAI to the UE. The UE may use the alternative S-NSSAI to initiate the PDU session. The foregoing information usually needs to be sent by a network side to the UE. The UE can initiate a service corresponding to S-NSSAI only when a condition is met, for example, the UE requests the S-NSSAI or mapped (mapped) S-NSSAI corresponding to the S-NSSAI, and initiates a PDU session corresponding to the S-NSSAI.

However, there is a correspondence between S-NSSAI and a frequency band. For example, a frequency band may support only one or more pieces of S-NSSAI. When the UE performs cell reselection, the network side can generate a corresponding RFSP index based on the allowed NSSAI and the target NSSAI to prevent the UE from continuously attempting to perform cell reselection. For example, the AMF sends the allowed NSSAI or the target NSSAI to a PCF, and the PCF sends the generated RFSP index to the AMF. The AMF further sends the generated RFSP index to the RAN. For example, the following Table 2 shows definition of the RFSP index:

**Table 2**

| RFSP index | Definition |
|---|---|
| RFSP index for allowed NSSAI | RFSP index associated with the allowed NSSAI of UE |
| RFSP index for target NSSAI | RFSP index associated with the target NSSAI of the UE |

However, when S-NSSAI is a restricted slice, the slice has timeliness and regionality, and a generated RFSP index is no longer accurate. Alternatively, when S-NSSAI is unavailable, a corresponding RFSP index may still redirect the UE to a corresponding cell. Alternatively, when S-NSSAI is available, a corresponding RFSP index may still fail to redirect the UE to a corresponding cell. For example, when the UE belongs to the partially allowed NSSAI, a current policy control function (policy control function, PCF) network element cannot generate a corresponding RFSP index for allowed NSSAI.

In view of this, embodiments of this application provide a communication method. In the method, a PCF may sense slice restriction information, and generate a corresponding RFSP index, so that efficiency and accuracy of cell reselection performed by UE can be improved, and the UE is prevented from being redirected to an outage cell.

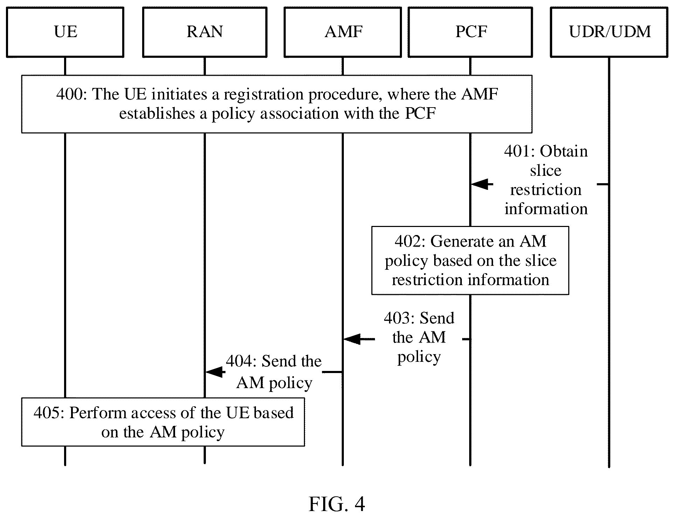

In a possible embodiment, FIG. 4 is a schematic flowchart of a communication method according to this embodiment of this application. The procedure may include the following steps.

Step 400: UE initiates a registration procedure, where an AMF establishes a policy association with a PCF.

Step 401: The PCF obtains slice restriction information from a UDR or a UDM. The slice restriction information may include but is not limited to at least one of S-NSSAI, a slice area of service (area of service, AoS) for the S-NSSAI, and slice validity time for the S-NSSAI.

In some embodiments, the S-NSSAI may be subscribed S-NSSAI.

In some embodiments, in addition to obtaining the slice restriction information from the UDR or the UDM, the PCF may also configure slice restriction information in the PCF, so that the PCF may directly obtain the slice restriction information locally.

Step 402: The PCF generates an AM policy based on the slice restriction information.

In some embodiments, the generated AM policy may include an RFSP index.

In some other embodiments, in addition to the RFSP index, the generated AM policy may further include RFSP restriction information. The RFSP restriction information may include but is not limited to at least one of validity time information corresponding to the RFSP index and area of service information corresponding to the RFSP index. For example, when a location of the UE changes and the AM policy does not include the RFSP restriction information, the RFSP index needs to be updated; or when the AM policy includes the RFSP restriction information, access of the UE may be directly performed based on updated location information and the RFSP index. In this way, according to this embodiment, a core network can be prevented from frequently updating information.

In addition, the RFSP restriction information may be obtained based on at least one of an area of service for S-NSSAI for generating the RFSP index and validity time for the S-NSSAI for generating the RFSP index. Validity time or an area of service for a network slice may be determined based on information like a service type or a service requirement. For example, if a service features a time period, validity time information of the network slice may be set. For another example, if a service features a fixed location, area of service information of the network slice may be set.

Step 403: The PCF sends the AM policy to the AMF.

In some embodiments, when the AM policy includes the RFSP index, the PCF may send the RFSP index to the AMF.

In some other embodiments, in addition to the RFSP index, the AM policy may further include the RFSP restriction information. In this case, the PCF may send the RFSP index and the RFSP restriction information to the AMF.

Step 404: The AMF sends the AM policy to a RAN.

In some embodiments, when the AM policy includes the RFSP index, the AMF may forward the RFSP index to the RAN.

In some other embodiments, in addition to the RFSP index, the AM policy may further include the RFSP restriction information. In this case, the AMF may forward the RFSP index and the RFSP restriction information to the RAN.

Step 405: The RAN performs the access of the UE based on the AM policy.

In some embodiments, the RAN may implement cell selection or reselection of the UE based on the RFSP index included in the AM policy.

In some other embodiments, the RAN may further implement cell selection or reselection of the UE based on the RFSP index and the RFSP restriction information that are included in the AM policy.

In the foregoing implementation, the PCF may obtain the slice restriction information from the UDR, the UDM, or the PCF, to generate the AM policy based on the slice restriction information. In this way, the slice restriction information is considered in the generated AM policy, so that accuracy of the AM policy can be ensured. In addition, the AM policy may include not only the RFSP index, but also the RFSP restriction information, so that the RAN can update the RFSP index based on the location of the UE, and the core network does not need to perform real-time update.

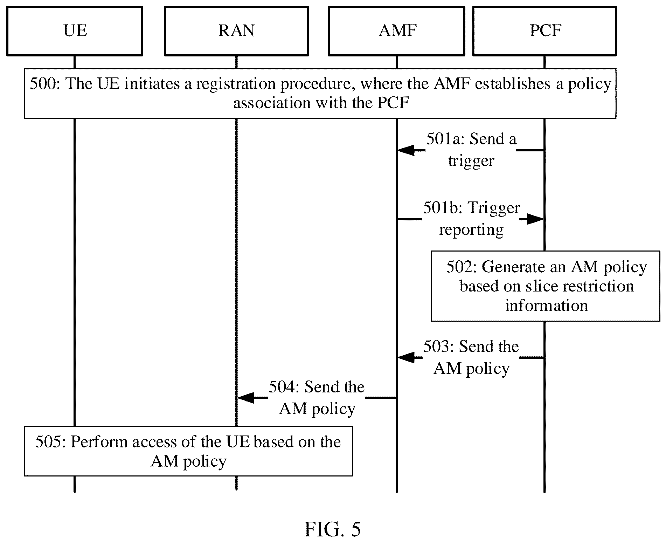

In another possible embodiment, FIG. 5 is a schematic flowchart of a communication method according to this embodiment of this application. The procedure may include the following steps.

Step 500: UE initiates a registration procedure, where an AMF establishes a policy association with a PCF. Step 500 is similar to step 400.

Step 501a: A PCF sends a trigger to the AMF.

In some possible embodiments, a trigger condition corresponding to the trigger may include but is not limited to at least one of the following information:
(1) a change of at least one of the following: S-NSSAI, a corresponding slice area of service, and corresponding slice validity time, where in some embodiments, the PCF may first obtain the S-NSSAI in allowed NSSAI and target NSSAI, and set a change of the slice area of service and/or the slice validity time for the S-NSSAI;
(2) a change of partially allowed M pieces of S-NSSAI (where M is a positive integer), where optionally, a change of M supported tracking area lists (TA lists) that one-to-one correspond to the M pieces of S-NSSAI is further included;
(3) a change of partially rejected N pieces of S-NSSAI (where N is a positive integer), where optionally, N supported or unsupported TA lists that one-to-one correspond to the N pieces of S-NSSAI are further included, and the N supported or unsupported TA lists may be N supported TA lists, or may be N unsupported TA lists, or a part of the N supported or unsupported TA lists may be supported TA lists and the other part of the N supported or unsupported TA lists may be unsupported TA lists; and
(4) a change of alternative S-NSSAI.

Step 501b: The AMF is triggered to report information, and the PCF receives the information reported by the AMF. It may be understood that when detecting, based on the trigger, that the trigger condition is met, the AMF may trigger reporting of changed information content.

In some embodiments, the PCF may obtain slice restriction information from the AMF, and the slice restriction information may include but is not limited to at least one of the following information: S-NSSAI, a slice area of service for the S-NSSAI, slice validity time for the S-NSSAI, partially allowed M pieces of S-NSSAI (where M is a positive integer), M supported tracking area lists that one-to-one correspond to the M pieces of S-NSSAI, partially rejected N pieces of S-NSSAI (where N is a positive integer), N supported or unsupported tracking area lists that one-to-one correspond to the N pieces of S-NSSAI, and alternative S-NSSAI.

Step 502: The PCF generates an AM policy based on the slice restriction information.

In some embodiments, the generated AM policy may include an RFSP index.

In some other embodiments, in addition to the RFSP index, the generated AM policy may further include RFSP restriction information. The RFSP restriction information may include but is not limited to at least one of validity time information corresponding to the RFSP index and area of service information corresponding to the RFSP index. For example, when a location of the UE changes and the AM policy does not include the RFSP restriction information, the RFSP index needs to be updated; or when the AM policy includes the RFSP restriction information, access of the UE may be directly performed based on updated location information and the RFSP index. In this way, according to this embodiment, a core network can be prevented from frequently updating information.

In addition, the RFSP restriction information may be obtained based on at least one of an area of service for S-NSSAI for generating the RFSP index and validity time for the S-NSSAI for generating the RFSP index. Validity time or an area of service for a network slice may be determined based on information like a service type or a service requirement. For example, if a service features a time period, validity time information of the network slice may be set. For another example, if a service features a fixed location, area of service information of the network slice may be set.

In addition, in embodiments of this application, a form of carrying the RFSP restriction information is not limited. For example, the RFSP restriction information may be carried in an information form, an information element form, or a combination form. For example, the RFSP restriction information may further indicate at least one of the following: RFSP indexes associated with the partially allowed M pieces of S-NSSAI, RFSP indexes associated with the partially rejected N pieces of S-NSSAI, and an RFSP index of alternative S-NSSAI. In this way, both the RFSP restriction information and the RFSP index can be reflected based on only the information.

Step 503: The PCF sends the AM policy to the AMF.

In some embodiments, when the AM policy includes the RFSP index, the PCF may send the RFSP index to the AMF.

In some other embodiments, in addition to the RFSP index, the AM policy may further include the RFSP restriction information. In this case, the PCF may send the RFSP index and the RFSP restriction information to the AMF.

Step 504: The AMF sends the AM policy to a RAN.

In some embodiments, when the AM policy includes the RFSP index, the AMF may forward the RFSP index to the RAN.

In some other embodiments, in addition to the RFSP index, the AM policy may further include the RFSP restriction information. In this case, the AMF may forward the RFSP index and the RFSP restriction information to the RAN.

Step 505: The RAN performs the access of the UE based on the AM policy.

In some embodiments, the RAN may implement cell selection or reselection of the UE based on the RFSP index included in the AM policy.

In some other embodiments, the RAN may further implement cell selection or reselection of the UE based on the RFSP index and the RFSP restriction information that are included in the AM policy.

In the foregoing implementation, the PCF may further obtain the slice restriction information from the AMF, to generate the AM policy based on the slice restriction information. In this way, the slice restriction information is considered in the generated AM policy, so that accuracy of the AM policy can be ensured. In addition, the AM policy may include not only the RFSP index, but also the RFSP restriction information, so that the RAN can update the RFSP index based on the location of the UE, and the core network does not need to perform real-time update.

In some other embodiments, when detecting that S-NSSAI is available, the AMF may report the S-NSSAI as the allowed NSSAI to the PCF, so that the UE can also perform accurate cell reselection. That the AMF detects that the S-NSSAI is available may include but is not limited to at least one of the following scenarios: The UE is located in a slice area of service and/or slice validity time is met; and the S-NSSAI belongs to the partially allowed NSSAI, and a TA in which the UE is currently located supports the S-NSSAI.

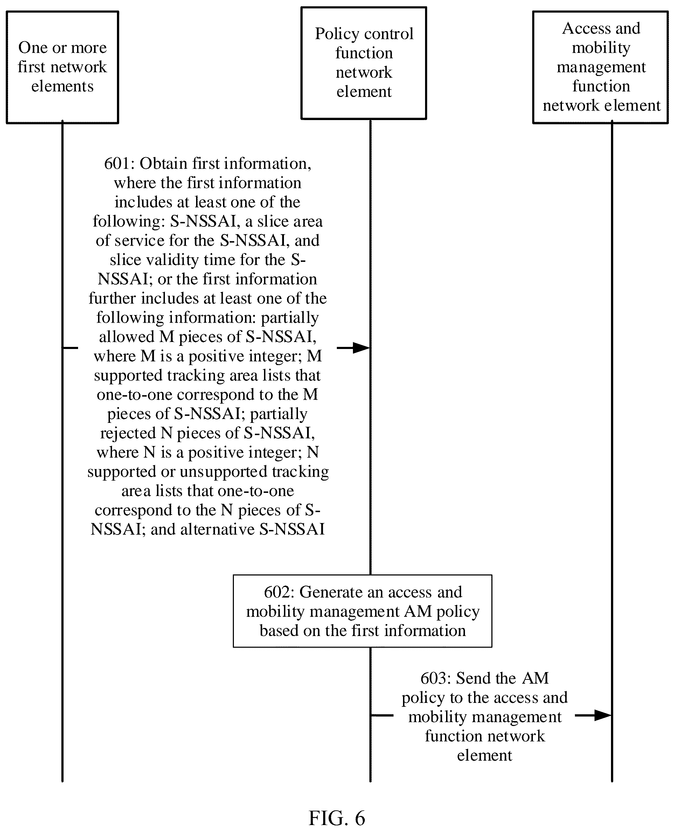

In still some embodiments, FIG. 6 is a schematic flowchart of a communication method according to an embodiment of this application. The procedure may include the following steps.

Step 601: A policy control function network element obtains first information from one or more first network elements, where the first information includes at least one of the following: S-NSSAI, a slice area of service for the S-NSSAI, and slice validity time for the S-NSSAI; or the first information includes at least one of the following information: partially allowed M pieces of S-NSSAI, where M is a positive integer; M supported tracking area lists that one-to-one correspond to the M pieces of S-NSSAI; partially rejected N pieces of S-NSSAI, where N is a positive integer; N supported or unsupported tracking area lists that one-to-one correspond to the N pieces of S-NSSAI; and alternative S-NSSAI. The first network element may be, for example, the UDR, the UDM, or the PCF shown in FIG. 4, or may be the AMF shown in FIG. 5.

Step 602: The policy control function network element generates an access and mobility management AM policy based on the first information.

Step 603: The policy control function network element sends the AM policy to an access and mobility management function network element.

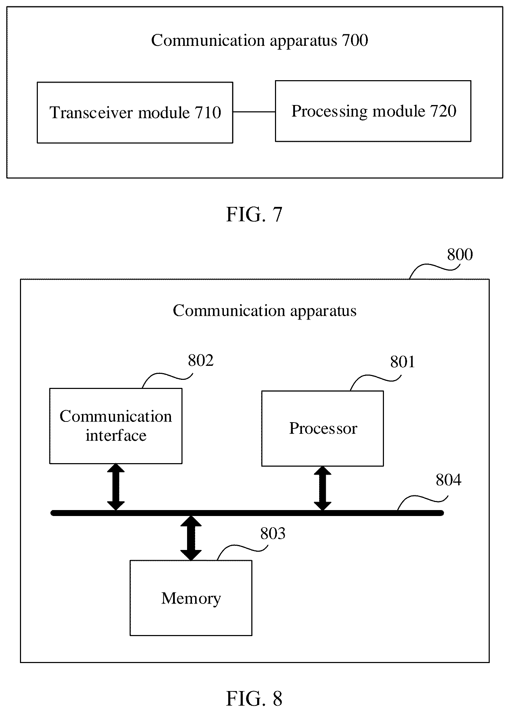

Based on a same technical concept as the method embodiment, embodiments of this application further provide a communication apparatus. FIG. 7 is a diagram of a structure of a communication apparatus according to an embodiment of this application. The communication apparatus 700 includes: a transceiver module 710 and a processing module 720. The communication apparatus may be configured to implement a function of the policy control function network element according to any one of the foregoing method embodiments. The communication apparatus may be a policy control function network element or a chip or a circuit included in the policy control function network element.

The transceiver module 710 is configured to obtain first information from one or more first network elements. The first information includes at least one of the following: single network slice selection assistance information S-NSSAI, a slice area of service for the S-NSSAI, and slice validity time for the S-NSSAI. The first information further includes at least one of the following information: partially allowed M pieces of S-NSSAI, where M is a positive integer; M supported tracking area lists that one-to-one correspond to the M pieces of S-NSSAI; partially rejected N pieces of S-NSSAI, where N is a positive integer; N supported or unsupported tracking area lists that one-to-one correspond to the N pieces of S-NSSAI; and alternative S-NSSAI. The processing module 720 is configured to generate an access and mobility management AM policy based on the first information. The transceiver module 710 is further configured to send the AM policy to an access and mobility management function network element.

In a possible design, the AM policy indicates an RFSP index. Alternatively, the AM policy indicates an RFSP index and RFSP restriction information, and the RFSP restriction information indicates at least one of validity time information corresponding to the RFSP index and area of service information corresponding to the RFSP index.

In a possible design, the first network element is the access and mobility management function network element. Before obtaining the first information from the one or more first network elements, the transceiver module 710 is further configured to send a trigger to the access and mobility management function network element based on the first information. The trigger indicates the access and mobility management function network element to send updated information content to the policy control function network element when detecting that information content of the first information changes.

In a possible design, the AM policy indicates the RFSP restriction information, and the RFSP restriction information indicates at least one of the following: RFSP indexes associated with the partially allowed M pieces of S-NSSAI, RFSP indexes associated with the partially rejected N pieces of S-NSSAI, and an RFSP index of the alternative S-NSSAI.

In a possible design, the S-NSSAI is subscribed S-NSSAI.

In the foregoing possible designs, the first network element is the access and mobility management function network element, a unified data repository network element, a unified data management network element, or the policy control function network element.

Based on a same technical concept as the method embodiments, refer to FIG. 7. The communication apparatus 700 may be further configured to implement a function of the access and mobility management function network element according to any one of the foregoing method embodiments. The communication apparatus may be the access and mobility management function network element or a chip or a circuit included in the access and mobility management function network element.

The transceiver module 710 is configured to receive an AM policy sent by a policy control function network element. The transceiver module 710 is further configured to send second information to an access network device. The second information indicates the AM policy, and indicates the access network device to perform access of a terminal device based on the AM policy. The AM policy is generated by the policy control function network element based on one or more pieces of obtained first information. The first information includes at least one of the following: single network slice selection assistance information S-NSSAI, a slice area of service for the S-NSSAI, and slice validity time for the S-NSSAI. The first information further includes at least one of the following information: partially allowed M pieces of S-NSSAI, where M is a positive integer; M supported tracking area lists that one-to-one correspond to the M pieces of S-NSSAI; partially rejected N pieces of S-NSSAI, where N is a positive integer; N supported or unsupported tracking area lists that one-to-one correspond to the N pieces of S-NSSAI; and alternative S-NSSAI.

In a possible design, the AM policy indicates an RFSP index, and the second information includes the RFSP index. Alternatively, the AM policy indicates an RFSP index and RFSP restriction information, the RFSP restriction information indicates at least one of validity time information corresponding to the RFSP index and area of service information corresponding to the RFSP index, and the second information includes the RFSP index and the RFSP restriction information.

In a possible design, before receiving the AM policy sent by the policy control function network element, the transceiver module 710 is further configured to: receive a trigger sent by the policy control function network element. The processing module 720 is further configured to perform information monitoring based on the trigger. When that a trigger condition corresponding to the trigger is met is detected, the transceiver module 710 is further configured to send third information to the policy control function network element. The third information includes at least one of S-NSSAI, a slice area of service for the S-NSSAI, and slice validity time for the S-NSSAI. The third information further includes at least one of the following information: partially allowed M pieces of S-NSSAI, where M is a positive integer; M supported tracking area lists that one-to-one correspond to the M pieces of S-NSSAI; partially rejected N pieces of S-NSSAI, where N is a positive integer; N supported or unsupported tracking area lists that one-to-one correspond to the N pieces of S-NSSAI; and alternative S-NSSAI. The trigger condition indicates that information content of the third information changes.

In a possible design, the AM policy further indicates the RFSP restriction information, and the RFSP restriction information indicates at least one of the following: RFSP indexes associated with the partially allowed M pieces of S-NSSAI, RFSP indexes associated with the partially rejected N pieces of S-NSSAI, and an RFSP index of the alternative S-NSSAI.

In a possible design, before that the access and mobility management function network element receives the AM policy sent by the policy control function network element, the method further includes: The access and mobility management function network element sends fourth information to the policy control function network element when detecting that S-NSSAI is available. The fourth information indicates that the S-NSSAI is allowed S-NSSAI.

Based on a same technical concept as the method embodiments, refer to FIG. 7. The communication apparatus 700 may be further configured to implement a function of the access network device according to any one of the foregoing method embodiments. The communication apparatus may be an access network device or a chip or a circuit included in the access network device.

The transceiver module 710 is configured to receive first information sent by an access and mobility management function network element. The first information indicates an AM policy generated by a policy control function network element. The processing module 720 is configured to perform access of a terminal device based on the AM policy indicated in the first information. The AM policy is generated by the policy control function network element based on one or more pieces of obtained second information, and the second information includes: at least one of S-NSSAI, a slice area of service for the S-NSSAI, and slice validity time for the S-NSSAI. The first information further includes at least one of the following information: partially allowed M pieces of S-NSSAI, where M is a positive integer; M supported tracking area lists that one-to-one correspond to the M pieces of S-NSSAI; partially rejected N pieces of S-NSSAI, where N is a positive integer; N supported or unsupported tracking area lists that one-to-one correspond to the N pieces of S-NSSAI; and alternative S-NSSAI.

In a possible design, the AM policy indicates an RFSP index. Alternatively, the AM policy indicates an RFSP index and RFSP restriction information, and the RFSP restriction information indicates at least one of validity time information corresponding to the RFSP index and area of service information corresponding to the RFSP index.

It should be noted that the processing module 720 in the communication apparatus 700 may be implemented by at least one processor or a processor-related circuit component, and the transceiver module 710 may be implemented by at least one transceiver, a transceiver-related circuit component, or a communication interface. Operations and/or functions of the modules in the communication apparatus are separately used to implement corresponding procedures of the methods shown in FIG. 4 to FIG. 6. For brevity, details are not described herein again. Optionally, the communication apparatus may further include a storage module. The storage module may be configured to store data and/or instructions. The transceiver module 710 and/or the processing module 720 may read the data and/or the instructions in the storage module, to cause the communication apparatus to implement the corresponding method. For example, the storage module may be implemented through at least one memory.

The storage module, the processing module, and the transceiver module may exist separately, or all or some modules may be integrated. For example, the storage module is integrated with the processing module, or the processing module is integrated with the transceiver module.

FIG. 8 is a diagram of another structure of a communication apparatus according to an embodiment of this application. The communication apparatus 800 may be configured to implement a function corresponding to the access network device according to the foregoing method embodiments. The communication apparatus 800 may be an access network device, an apparatus that can support the access network device to implement a corresponding function according to the foregoing method embodiments, or the like.

The communication apparatus 800 may include a processor 801, a communication interface 802, and a memory 803. The communication interface 802 is configured to communicate with another device via a transmission medium. The communication interface 802 may be a transceiver, or may be an interface circuit like a transceiver circuit or a transceiver chip. The memory 803 is configured to store program instructions and/or data, and the processor 801 is configured to execute the program instructions stored in the memory 803, to implement the method according to the foregoing method embodiments. Optionally, the memory 803 and the processor 801 are coupled. The coupling is an indirect coupling or a communication connection between apparatuses, units, or modules, and may be in an electrical, mechanical, or another form, and is used for information exchange between the apparatuses, the units, or the modules.

In an embodiment, the communication interface 802 may be specifically configured to perform an action of the foregoing transceiver module 710, and the processor 801 may be specifically configured to perform an action of the foregoing processing module 720. Details are not described herein again in this application.

A specific connection medium between the communication interface 802, the processor 801, and the memory 803 is not limited in embodiments of this application. In embodiments of this application, the memory 803, the processor 801, and the communication interface 802 are connected through a bus 804 in FIG. 8. The bus is represented by using a bold line in FIG. 8. A connection manner between other components is merely an example for description, and is not limited thereto. The bus may be classified into an address bus, a data bus, a control bus, and the like. For ease of representation, only one thick line is for representing the bus in FIG. 8, but this does not mean that there is only one bus or only one type of bus.

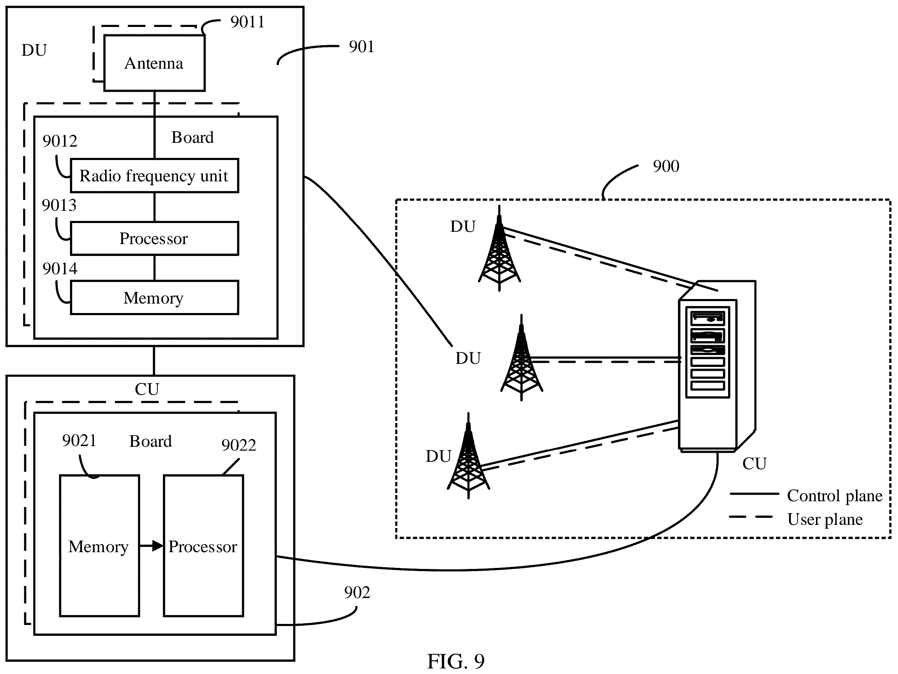

FIG. 9 is a diagram of another structure of a communication apparatus according to an embodiment of this application. The communication apparatus 900 may be configured to implement a function of the access network device according to any one of the foregoing method embodiments. The communication apparatus 900 is specifically an access network device, for example, a base station.

The communication apparatus 900 includes one or more DUs 901 and one or more CUs 902. The DU 901 may include at least one antenna 9011, at least one radio frequency unit 9012, at least one processor 9013, and at least one memory 9014. The DU 901 is mainly configured to: send and receive a radio frequency signal, perform conversion between a radio frequency signal and a baseband signal, and perform partial baseband processing.

The CU 902 may include at least one processor 9022 and at least one memory 9021. The CU 902 is mainly configured to: perform baseband processing, control the base station, and the like. The CU 902 is a control center of the base station, and may also be referred to as a processing unit. For example, the CU 902 may be configured to control the base station to perform the operations or steps corresponding to the first access network device in the methods shown in FIG. 4 to FIG. 6.

The CU 902 and the DU 901 may communicate with each other through an interface. A control plane (control plane, CP) interface may be Fs-C, for example, F1-C, and a user plane (user plane, UP) interface may be Fs-U, for example, F1-U. The DU 901 and the CU 902 may be physically disposed together, or may be physically disposed separately (that is, distributed base stations). This is not limited.

Specifically, baseband processing of the CU and the DU may be divided based on a protocol layer of a wireless network. For example, functions of a PDCP layer and a layer above the PDCP layer are set on the CU, and functions of protocol layers below the PDCP layer (for example, an RLC layer and a MAC layer) are set on the DU. For another example, the CU implements functions of an RRC layer and a PDCP layer, and the DU implements functions of an RLC layer, a MAC layer, and a physical (physical, PHY) layer.

Optionally, the communication apparatus 900 may include one or more radio frequency units (RUs), one or more DUs, and one or more CUs. The DU may include at least one processor 9013 and at least one memory 9014, the RU may include at least one antenna 9011 and at least one radio frequency unit 9012, and the CU may include at least one processor 9022 and at least one memory 9021.

In an embodiment, the CU 902 may include one or more boards. A plurality of boards may jointly support a radio access network (for example, a 5G network) with a single access indication, or may separately support radio access networks (for example, an LTE network, a 5G network, or another network) with different access standards. The memory 9021 and the processor 9022 may serve one or more boards. In other words, the memory and processor can be separately set on each board. Alternatively, a plurality of boards may share a same memory and a same processor. In addition, a necessary circuit may be further disposed on each board.

The DU 901 may include one or more boards. A plurality of boards may jointly support a radio access network (for example, a 5G network) with a single access indication, or may separately support radio access networks (for example, an LTE network, a 5G network, or another network) with different access standards. The memory 9014 and the processor 9013 may serve one or more boards. In other words, the memory and processor can be separately set on each board. Alternatively, a plurality of boards may share a same memory and a same processor. In addition, a necessary circuit may be further disposed on each board.

An embodiment of this application further provides a chip system, including: a processor. The processor is coupled to a memory, the memory is configured to store a program or instructions, and when the program or the instructions are executed by the processor, the chip system is caused to implement the method corresponding to the UE or the access network device according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer-readable storage medium. The computer storage medium stores computer-readable instructions. When a computer reads and executes the computer-readable instructions, the computer is caused to perform the method according to any one of the foregoing method embodiments.

An embodiment of this application further provides a computer program product. When a computer reads and executes the computer program product, the computer is caused to perform the method according to any one of the foregoing method embodiments.

It should be understood that the processor mentioned in embodiments of this application may be a CPU, or may be another general-purpose processor, a DSP, an ASIC, an FPGA or another programmable logic device, a discrete gate or a transistor logic device, a discrete hardware component, or the like. The general-purpose processor may be a microprocessor, or the processor may be any conventional processor or the like.

It may be further understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory, an erasable programmable read-only memory, an electrically erasable programmable read-only memory, or a flash memory. The volatile memory may be a random access memory (random access memory, RAM) that is used as an external cache. By way of example but not for limitation, a plurality of forms of RAMs are available, for example, a static random access memory, a dynamic random access memory, a synchronous dynamic random access memory, a double data rate synchronous dynamic random access memory, an enhanced synchronous dynamic random access memory, a synchlink dynamic random access memory, and a direct rambus random access memory.

It should be noted that when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification aims to include but is not limited to these memories and any memory of another proper type.

It should be understood that various numerical numbers in embodiments of this application are merely distinguished for ease of description, and sequence numbers of the foregoing processes or steps do not mean execution sequences. The execution sequences of the processes or steps should be determined based on functions and internal logic of the processes, and should not be construed as any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, technical solutions of this application essentially, or the part contributing to the prior art, or some of the technical solutions may be implemented in a form of a software product. The computer software product is stored in a storage medium, and includes a plurality of instructions for instructing a computer device (which may be a personal computer, a server, or an access network device) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

In embodiments of this application, unless otherwise stated or there is a logic conflict, terms and/or description between different embodiments are/is consistent and may be mutually referenced, and technical features in different embodiments may be combined based on an internal logical relationship thereof, to form a new embodiment.

## Claims

1. A communication method, comprising:
obtaining, by a policy control function network element, first information from one or more first network elements, wherein the first information comprises at least one of the following: single network slice selection assistance information S-NSSAI, a slice area of service for the S-NSSAI, and slice validity time for the S-NSSAI; or the first information comprises at least one of the following information: partially allowed M pieces of S-NSSAI, wherein M is a positive integer; M supported tracking area lists that one-to-one correspond to the M pieces of S-NSSAI; partially rejected N pieces of S-NSSAI, wherein N is a positive integer; N supported or unsupported tracking area lists that one-to-one correspond to the N pieces of S-NSSAI; and alternative S-NSSAI;
generating, by the policy control function network element, an access and mobility management AM policy based on the first information; and
sending, by the policy control function network element, the AM policy to an access and mobility management function network element.

2. The method according to claim 1, wherein the AM policy indicates an access technology/frequency selection priority index RFSP index; or
the AM policy indicates an RFSP index and RFSP restriction information, and the RFSP restriction information indicates at least one of validity time information corresponding to the RFSP index and area of service information corresponding to the RFSP index.

3. The method according to claim 1 or 2, wherein the first network element is the access and mobility management function network element, and before obtaining, by the policy control function unit, the first information from the one or more first network elements, the method further comprises:
sending, by the policy control function network element, a trigger to the access and mobility management function network element based on the first information, wherein the trigger indicates the access and mobility management function network element to send updated information content to the policy control function network element when detecting that information content of the first information changes.

4. The method according to any one of claims 1 to 3, wherein the AM policy indicates the RFSP restriction information, and the RFSP restriction information indicates at least one of the following: RFSP indexes associated with the partially allowed M pieces of S-NSSAI, RFSP indexes associated with the partially rejected N pieces of S-NSSAI, and an RFSP index of alternative S-NSSAI.

5. The method according to any one of claims 1 to 4, wherein the S-NSSAI is subscribed S-NSSAI.

6. The method according to any one of claims 1 to 5, wherein the first network element is the access and mobility management function network element, a unified data repository network element, a unified data management network element, or the policy control function network element.

7. A communication method, comprising:
receiving, by an access and mobility management function network element, an access and mobility management AM policy sent by a policy control function network element, wherein the AM policy is generated by the policy control function network element based on one or more pieces of obtained first information, and the first information comprises at least one of the following: single network slice selection assistance information S-NSSAI, a slice area of service for the S-NSSAI, and slice validity time for the S-NSSAI; or the first information comprises at least one of the following information: partially allowed M pieces of S-NSSAI, wherein M is a positive integer; M supported tracking area lists that one-to-one correspond to the M pieces of S-NSSAI; partially rejected N pieces of S-NSSAI, wherein N is a positive integer; N supported or unsupported tracking area lists that one-to-one correspond to the N pieces of S-NSSAI; and alternative S-NSSAI; and
sending, by the access and mobility management function network element, second information to an access network device, wherein the second information indicates the AM policy, and indicates the access network device to perform access of a terminal device based on the AM policy.

8. The method according to claim 7, wherein the AM policy indicates an access technology/frequency selection priority index RFSP index, and the second information comprises the RFSP index; or
the AM policy indicates an RFSP index and RFSP restriction information, the RFSP restriction information indicates at least one of validity time information corresponding to the RFSP index and area of service information corresponding to the RFSP index, and the second information comprises the RFSP index and the RFSP restriction information.

9. The method according to claim 7 or 8, wherein before receiving, by the access and mobility management function network element, the AM policy sent by the policy control function network element, the method further comprises:
receiving a trigger sent by the policy control function network element; and
performing information monitoring based on the trigger, and sending third information to the policy control function network element upon detection that a trigger condition corresponding to the trigger is met, wherein the trigger condition comprises at least one of the following:
a change of at least one of the following: single network slice selection assistance information S-NSSAI, a corresponding slice area of service, and corresponding slice validity time;
a change of partially allowed M pieces of S-NSSAI, wherein M is a positive integer;
a change of partially rejected N pieces of S-NSSAI, wherein N is a positive integer; and
a change of alternative S-NSSAI.

10. The method according to claim 9, wherein the third information comprises at least one of the following: S-NSSAI, a slice area of service for the S-NSSAI, and slice validity time for the S-NSSAI; or the third information comprises at least one of the following information: partially allowed M pieces of S-NSSAI, wherein M is a positive integer; M supported tracking area lists that one-to-one correspond to the M pieces of S-NSSAI; partially rejected N pieces of S-NSSAI, wherein N is a positive integer; N supported or unsupported tracking area lists that one-to-one correspond to the N pieces of S-NSSAI; and alternative S-NSSAI; and the trigger condition indicates that information content of the third information changes.

11. The method according to any one of claims 7 to 10, wherein the AM policy further indicates RFSP restriction information, and the RFSP restriction information indicates at least one of the following: RFSP indexes associated with the partially allowed M pieces of S-NSSAI, RFSP indexes associated with the partially rejected N pieces of S-NSSAI, and an RFSP index of alternative S-NSSAI.

12. The method according to claim 7 or 8, wherein before receiving, by the access and mobility management function network element, the AM policy sent by the policy control function network element, the method further comprises:
sending, by the access and mobility management function network element, fourth information to the policy control function network element when detecting that S-NSSAI is available, wherein the fourth information indicates that the S-NSSAI is allowed S-NSSAI.

13. A communication method, comprising:
receiving, by an access network device, first information sent by an access and mobility management function network element, wherein the first information indicates an access and mobility management AM policy generated by a policy control function network element, the AM policy is generated by the policy control function network element based on one or more pieces of obtained second information, and the second information comprises at least one of the following: single network slice selection assistance information S-NSSAI, a slice area of service for the S-NSSAI, and slice validity time for the S-NSSAI; or the first information comprises at least one of the following information: partially allowed M pieces of S-NSSAI, wherein M is a positive integer; M supported tracking area lists that one-to-one correspond to the M pieces of S-NSSAI; partially rejected N pieces of S-NSSAI, wherein N is a positive integer; N supported or unsupported tracking area lists that one-to-one correspond to the N pieces of S-NSSAI; and alternative S-NSSAI; and
performing, by the access network device, access of a terminal device based on the AM policy indicated in the first information.

14. The method according to claim 13, wherein the AM policy indicates an access technology/frequency selection priority index RFSP index; or
the AM policy indicates an RFSP index and RFSP restriction information, and the RFSP restriction information indicates at least one of validity time information corresponding to the RFSP index and area of service information corresponding to the RFSP index.

15. A communication apparatus, comprising a module configured to perform the method according to any one of claims 1 to 6, or a module configured to perform the method according to any one of claims 7 to 12, or a module configured to perform the method according to claim 13 or 14.

16. A communication apparatus, wherein the apparatus comprises at least one processor, the at least one processor is coupled to at least one memory, and the at least one processor is configured to execute a computer program or instructions stored in the at least one memory, to cause the apparatus to perform the method according to any one of claims 1 to 6, or perform the method according to any one of claims 7 to 12, or perform the method according to claim 13 or 14.

17. A computer-readable storage medium, configured to store instructions, wherein when the instructions are executed, the method according to any one of claims 1 to 6 is implemented, or the method according to any one of claims 7 to 12 is implemented, or the method according to claim 13 or 14 is implemented.
